# EUROPEAN PATENT APPLICATION

(11) **EP 1 098 095 A2**
(43) Date of publication of application: **09.05.2001**
(21) Application number: 00309232.7
(22) Date of filing: 19.10.2000
(51) Int. Cl.: F16B 45/02

(54) **Mooring catcher**

(30) Priority: 02.11.1999 GB 9925796
(71) Applicant: Dean, Paul Edward, Hampshire PO16 8HL (GB)
(72) Inventor: Dean, Paul Edward, Hampshire PO16 8HL (GB)

(57) **Abstract**

A mooring catcher, e.g. a means of remotely securing a warp to a mooring bouy, pontoon cleat, mooring pile or bar. The mooring catcher can be transported to a mooring point at a distance, released and retreived also at a distance with a boat hook, while the operator remains safely aboard the craft. The body is releasably secured to a mooring point.

## Description

### BACKGROUND TO THE INVENTION

This invention relates to a mooring catcher where secure attachment is required quickly and simply at a distance from craft to mooring point, with a means to release and retreive the device easily when detachment being required also from a distance.

The mooring of leisure craft has presented many problems particularly with the increasing size of craft making the deck from water line height greater. Some designs of powered craft with smooth sloping coachroofs and foredecks also present problems, such as hanging precariously by the legs over bows trying to thread a line through a bouy eye, or leaping from craft to pontoon to attach a line to a cleat.

This device would allow the less agile and not so able bodied among us, who would not consider such precarious and sometimes harrowing procedures, to assist in mooring.

The use of hooks remotely deployed is known, with reference to Le Nach Pat: No: 5820181 but instant attachment cannot be guaranteed and retreival relies upon a thin trip line, also the aperture is partly restricted by the finger and lever. In Ronald. D. Hart Pat: No: 4932700 difficulty would arise when untimely removal of the blocking member results in the whole operation having to be repeated, and under adverse currents or wind possible loss of mooring point.

Refering to Buckingham G.B. Pat: No: 0223726A. This device has the same purpose but not the same operation. Difficulty arising when attempting to disengage the device for retreival with a pushing motion to the pole and or pulling motion on the mooring line whilst manouvering the pole to push the mooring eye up into a rightangle to the longer limb of the hook, the more the pull on the line the more the effort required to push on the pole,

Refering to Bulten-Kanthal G.B. Pat: No: 1430543A. This device relates to a lifting device which may be closed and locked manually during a lifting operation. The operation of which is unsuitable and unable to be used for remote secure attachment and remote detachment of a mooring point, also access to the aperture is very restricted.

Refering to Perry G.B. Pat: No: 0367222A. This device relates to a lifting device which has a latch to close or open an aperture for receiving a ring or link, the latch will remain in the open position until manually moved to the closed position this device is unsuitable and unable to be used for remote secure attachment and remote detachment of a mooring point, also access to the aperture is very restricted.

The present invention will overcome these problems being the principal purpose and object of the invention providing a remotely operated mooring catcher able to be operated with a suitably equipped pole having a forward projection and side hook conventionally to be found at the end of a boat hook, very often used in boating maintaining simplicity in operation.

In overcoming these problems as mentioned above the present invention provides an improved method of attaching and detaching a mooring line at a distance remotely to and from a mooring point, provided with a movable means to close the aperture and means to retain the movable means in an aperture open position. The device consists of a hook shaped body with a wide aperture to freely accept a mooring point being mountable upon a boat hook for attachment, and retreival.

This being acheived by inserting the boat hook into the socket provided.

Engagement is acheived by striking the latch part of the device against the mooring point this would push the latch open allowing the mooring point to pass through the aperture upon which a latch would snap shut behind and secure instantly the mooring point. The boat hook is then removed.

For disengagement the hooked part of a boat hook is used to pull the trigger until the latch engages with the latch lock, the boat hook then inserted in socket as described and retreival acheived.

Refering to the drawings in which:-
FIG. 1 is a side view closed position;
FIG. 2 is a side view open position;

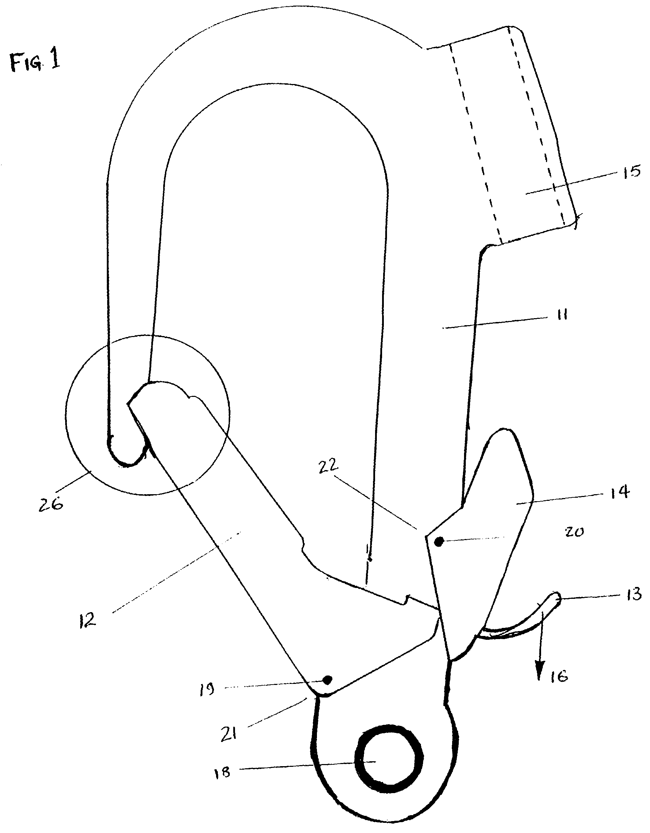

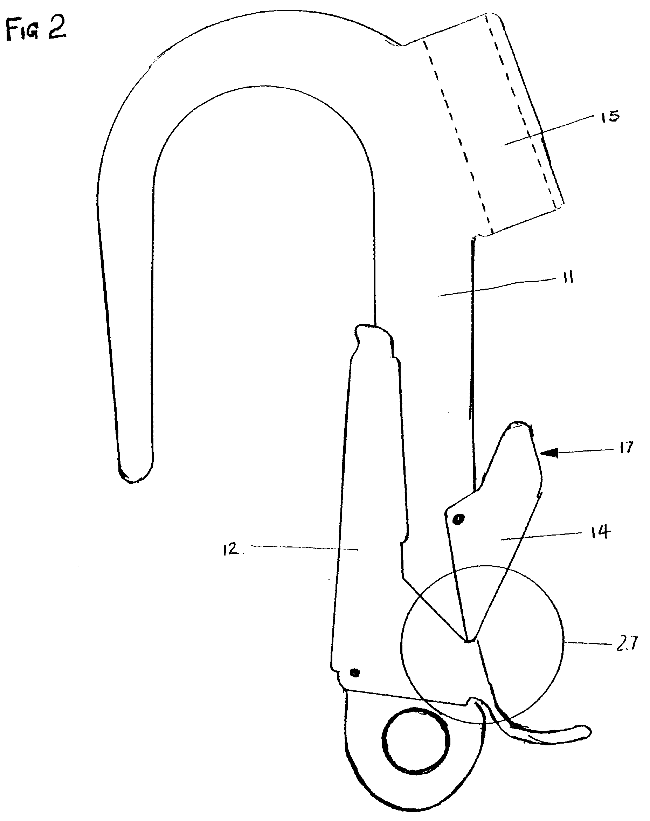

Refering now more particularly to the drawings, the device consists of a hook shaped body 11 with a ring 18 for attaching a line. On the body 11 is a latch 12 and a helical spring 21 securred by pivot pin 19, the latch 12 being spring biased to the closed position. The latch 12 being U shaped in section and so dimensioned as to engage the body 11 when in the closed position as shown in detail 26 FIG. 1 preventing lateral movement. When the latch 12 is in the locked open position the U shaped section of the latch 12 allows the latch 12 to lay over and around the body 11 as shown ing FIG. 2.

There is incorporated and forming part of the latch 12 an extention namely the trigger 13. There is incorportaed on the body 11 a latch lock 14 U shaped in section securred with pivot pin 20 and spring biased by a helical spring 22 FIG. 1 to engage into a seating privided on the latch 12 as shown in detail 27 FIG. 2.

As viewed in FIG. 1 the latch 12 is spring biased to rotate about pivot pin 19 anti-clockwise whilst the latch lock 14 is spring biased to rotate about pivot pin 20 clockwise.

Forming part of the body 11 is a socket 15 so dimentioned to accept a boat hook.

To release the device the hook part of the boat hook is used to pull the trigger 13 in direction of arrow 16 FIG. 1 until the latch is engaged with the latch lock. The boat hook is then inserted into the socket 15 for retreival Temproray attachment with the mooring point maybe required at times, then the latch can remain in the open position but if instant attchment is decided a sharp tap with the boat hook on the laych lock in direction of arrow 17 FIG. 2 will release the latch. All these operations maybe carried out by hand if within arms length.

The materials used would be of a non-corrosive nature, in this instance an aluminium alloy for the body and stainless steel for the latch, latch lock, pivot pins and springs. It is anticipated that a material such as thermo plastic be a suitable alternative for less strenuous applications, such as small craft, dinghies and the like. It is apparent that this device may have other applications where a line is required to be attached and detached remotely.

## Claims

1. A mooring catcher for use with a pole, making is possible to secure a line to a fixed point at a distance and to release the line from a fixed point at a distance, comprising a main body member having means to releasably receive an end of the pole to allow the body to be moved by the pole to and from the fixed point and being shaped to define a large opening to a secure area; a latch being pivoted on the body and being spring biased from a open position allowing access to the opening to a closed position closing the opening; the end of the latch engaging the body in a closed position in a manner to resist transverse movement of the latch end and the latch being automatically engaged in the open position by a latch lock which holds the latch in the open position; the latch having a trigger portion engageable by the pole to move the latch to the open position and the latch lock being engageable by the pole to release the latch.

2. A mooring catcher as claimed in claim 1 whereby instant attachment can be acheived by striking the latch part of the mooring catcher against the mooring point, allowing the mooring point to pass through the aperture into the secure area whereby the latch would spring shut.

3. A mooring catcher as claimed in claim 1 and claim 2 whereby there is provided on the body a means to transport the mooring catcher to and from a mooring point, this means being a socket to receive a pole, this pole being equipped with a protrusion and hook being conventionally found at the end of a boat hook used in boating, this pole being inserted into the socket.

4. A mooring catcher as claimed in any preceeding wherein there is provided on the body a ring shape so as to secure a warp.

5. A mooring catcher substantially as described herein with reference to the accompanying drawings.
